Europäisches Patentamt

European Patent Office

Office européen des brevets

(11) Veröffentlichungsnummer: **0 180 893**
**B1**

## (12) EUROPÄISCHE PATENTSCHRIFT

(45) Veröffentlichungstag der Patentschrift:
**15.03.89**

(21) Anmeldenummer: **85113707.5**

(22) Anmeldetag: **28.10.85**

(51) Int. Cl.⁴: **H02G 1/12**

### (54) Vorrichtung zum Abisolieren von Drähten und Litzen.

(30) Priorität: **02.11.84 DE 3440170**

(43) Veröffentlichungstag der Anmeldung:
**14.05.86 Patentblatt 86/20**

(45) Bekanntmachung des Hinweises auf die Patenterteilung:
**15.03.89 Patentblatt 89/11**

(84) Benannte Vertragsstaaten:
**AT CH DE FR GB IT LI SE**

(56) Entgegenhaltungen:
**DE-A- 3 132 965**
**DE-C- 912 354**
**FR-A- 2 075 593**
**FR-A- 2 488 184**

(73) Patentinhaber: **Siemens Aktiengesellschaft Berlin und München, Wittelsbacherplatz 2, D-8000 München 2(DE)**

(72) Erfinder: **Eidling, Karl, Riedhofweg 3, D-8195 Egling(DE)**

## Beschreibung

Die Erfindung betrifft eine Vorrichtung zum Abisolieren von vorzugsweise thermoplastisch isolierten Drähten und Litzen sowohl partiell als auch an den Enden.

Zum thermischen Abisolieren von Drähten werden beispielsweise elektrisch beheizbare Mittel oder eine Flamme verwendet. Nachteilig bei diesen bekannten Abisolierverfahren ist, daß der abzuisolierende Bereich nicht exakt eingehalten werden kann, so daß bei Überschreitung einer bestimmten Isolierlänge eine ungewollte elektrische Verbindung mit anderen Teilen entstehen kann.

In der DE-OS 3 132 965 ist ein Verfahren zum partiellen Abisolieren von isolierten Drähten, insbesondere von lackisolierten Drähten, beschrieben. Dabei wird der abzuisolierende Draht an der zu behandelnden Stelle zwischen zwei im rechten Winkel zu dem Draht angeordneten Kontaktbändern hindurchgeführt und von diesen mit Hilfe von Elektroden geklemmt. Durch Auslösen eines Stromimpulses werden die Bänder so stark erwärmt, daß die Lackisolation des Drahtes auf der Breite der Kontaktbänder schmilzt bzw. verdampft.

In der DE-C 912 354 ist eine Vorrichtung zur Entfernung der Isolation von elektrischen Leitungen beschrieben und dargestellt, bei der mit stumpfen Schneiden die Isolierung eingeschnitten und von Hand abgezogen wird. Diese Patentschrift zeigt einen besonders einfachen Weg zur Einsparung des Transformators und damit zu einer wesentlichen Herabsetzung des notwendigen Apparaturaufwandes.

Andere bekannte Abisoliersysteme sind im allgemeinen nur für die Bearbeitung der Drahtenden geeignet und beruhen meist auf einem Zusammenwirken von mehreren präzise gesteuerten Schneid- und Abziehmessern. Daraus ergeben sich im allgemeinen und speziell beim Einsatz in automatischen Fertigungsmitteln folgende Nachteile:

– aufwendige Mechanik zur Betätigung der Schneidmesser,
– Wartungsaufwand,
– relativ hohes Gewicht und große Abmessungen,
– zusätzlicher Aufwand und Störanfälligkeit bei der Beseitigung der Isolierhülsen.

Für das automatische Verlegen von Schaltdrähten ist es oft zweckmäßig, daß mehrere Lötstellen durchgehend mit einem Draht verbunden werden. Daraus ergibt sich die Forderung, Drähte ungetrennt partiell abzuisolieren.

Der Erfindung liegt die Aufgabe zugrunde, die eingangs beschriebene Vorrichtung zu konzipieren. Diese Vorrichtung soll sehr klein und leicht sein, um beim Einsatz mit Industrierobotern das Greifergewicht gering zu halten.

Diese Aufgabe wird mit einer erfindungsgemäßen Vorrichtung dadurch gelöst, daß sich über einer ebenen, hitzebeständigen und schlecht wärmeleitenden oder vorgeheizten Unterlage, die vorzugsweise in einer Drahtführung angeordnet ist, ein auf den Draht beweglicher, kammartig geschlitzter und in Querrichtung mit einer Rille in Größe des Drahtdurchmessers ausgestatteter Schmelzbügel befindet und daß ferner Mittel vorgesehen sind, die diesen Bügel mit einer definierten Kraft während einer kurzzeitigen Erwärmung, zum Beispiel durch einen Stromimpuls, auf den Draht aufdrücken.

Gemäß einem weiteren Vorschlag der Erfindung ist in Verbindung mit dem Schmelzbügel eine Einrichtung, zum Beispiel ein Rohr, zur Abführung des abgezogenen Isolierwerkstoffes vorgesehen.

Mit der Vorrichtung nach der Erfindung können die geforderten Abisolierlängen auch bei kleinsten Ausmaßen exakt eingehalten werden. Weitere Vorteile, die die Vorrichtung nach der Erfindung bietet, sind:

– Partielles Abisolieren ist möglich,
– Einfache und sichere Abfuhr des abgezogenen Isolierwerkstoffes,
– Drähte können nicht eingeschnitten werden,
– Keine Einstell- bzw. Nachschleifarbeiten,
– Nur ein bewegtes Teil erforderlich,
– Der kleine, leichte und unkomplizierte Aufbau erfüllt die Voraussetzungen für den Einsatz in Verbindung mit Industrierobotern.

Die Erfindung wird anhand der Figuren erläutert. Es zeigen:

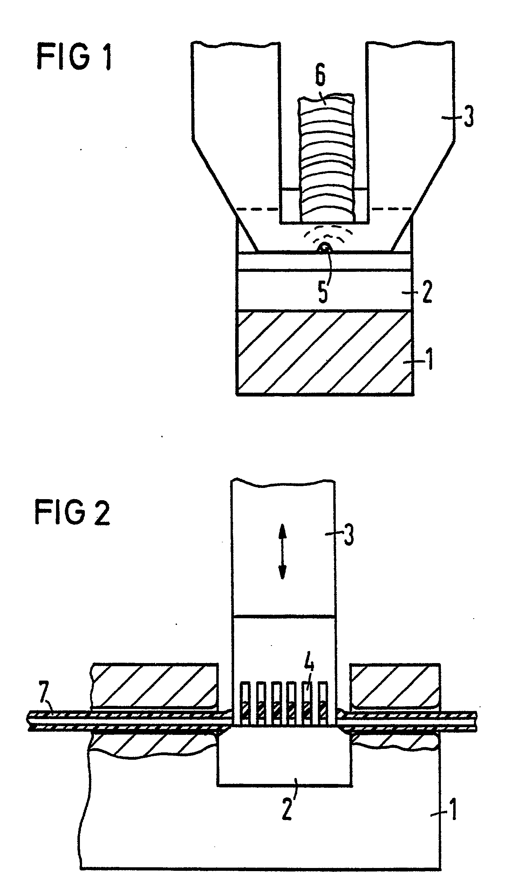

Figur 1 eine Vorderansicht auf eine Vorrichtung nach der Erfindung und
Figur 2 eine Seitenansicht mit der Drahtführung im Schnitt.

Auf einer Drahtführung 1 ist eine ebene, hitzebeständige und schlecht wärmeleitende Unterlage 2 vorgesehen. Ein Schmelzbügel 3 ist an seiner Unterseite mit kammartigen Ausnehmungen 4 ausgestattet. Dieser Bügel ist in vertikaler Richtung bewegbar und hat in Querrichtung eine Rille 5 in Größe des Drahtdurchmessers. Mit 6 ist der anfallende Isolierwerkstoff bezeichnet.

Der einzelne Abisoliervorgang läuft folgendermaßen ab:

Der kammartig geschlitzte und in Querrichtung mit einer Rille 5 in Größe des Drahtdurchmessers versehene Schmelzbügel 3 wird mit einer definierten Kraft auf den Draht 7 aufgedrückt. Dieser liegt dabei auf der ebenen, hitzebeständigen und schlecht wärmeleitenden Unterlage 2 auf.

Durch kurzzeitiges Erwärmen des Schmelzbügels 3, zum Beispiel durch einen Stromimpuls, sinkt dieser soweit in die Isolierung ein, bis er auf der Unterlage 2 aufliegt. Die abschmelzende Isolierung drückt sich dabei in die Schlitze 4 des Schmelzbügels. Nach Abkühlung des Schmelzbügels auf eine vom Isolierwerkstoff abhängige günstige Temperatur wird dieser vom Draht abgezogen, wobei die zwischen den Schlitzen 4 haftende Isolierung und die noch um den Draht liegenden Reste mit abgezogen werden. Der anfallende Isolierstoff 6 wird dabei strangförmig aus dem Schmelzbügel geschoben und kann zum Beispiel über ein nicht dargestelltes Rohr abgeführt werden.

## Patentansprüche

1. Vorrichtung zum Abisolieren von vorzugsweise thermoplastisch isolierten Drähten und Litzen (7) sowohl partiell als auch an den Enden mit beheizten auf den Draht aufdrückbaren Werkzeugbacken, dadurch gekennzeichnet, daß sich über einer ebenen, hitzebeständigen und schlecht wärmeleitenden oder vorgeheizten Unterlage (2), die vorzugsweise in einer Drahtführung (1) angeordnet ist, ein auf den Draht beweglicher, kammartig geschlitzter und in Querrichtung mit einer Rille (5) in Größe des Drahtdurchmessers ausgestatteter Schmelzbügel (3) befindet und daß ferner Mittel vorgesehen sind, die diesen Bügel mit einer definierten Kraft während einer kurzzeitigen Erwärmung, zum Beispiel durch einen Stromimpuls auf den Draht (7) aufdrücken.

2. Vorrichtung nach Anspruch 1, dadurch gekennzeichnet, daß in Verbindung mit dem Schmelzbügel (3) eine Einrichtung, zum Beispiel ein Rohr, zur Abführung des abgezogenen Isolierwerkstoffes (6) vorgesehen ist.

3. Verfahren zum Abisolieren von Drähten und Litzen mit einer Vorrichtung nach Anspruch 1 und 2, dadurch gekennzeichnet, daß sich die abschmelzende Isolierung über die gesamte abzuisolierende Länge in die Schlitze (4) des Schmelzbügels (3) drückt und nach Abkühlung des Schmelzbügels vom Draht abgezogen wird.

## Claims

1. Device for stripping off preferably thermoplastically insulated wires and strands (7) both partially and at the ends with heated tool jaws which can be pressed onto the wire, characterized in that there is a melting bow (3), which can be moved onto the wire, is slit in the manner of a comb and provided in transverse direction with a groove (5) of the size of the wire diameter, above a level, heat-resistant and poorly heat-conducting or pre-heated underlay (2), which is preferably arranged in a wire guide (1), and in that furthermore means are provided which press this bow onto the wire with a defined force during a brief heating, for example by a current pulse.

2. Device according to Claim 1, characterized in that in connection with the melting bow (3) there is provided a means, for example, a pipe, for the removal of the stripped-off insulating material (6).

3. Method of stripping off wires and strands with a device according to Claims 1 and 2, characterized in that the melting-off insulation is pressed over the entire length to be stripped off into the slit (4) of the melting bow (3) and is pulled off the wire after cooling of the melting bow.

## Revendications

1. Dispositif à dénuder des fils et torons (7), isolés de préférence par de la matière thermoplastique, tant partiellement qu'aux extrémités, avec des mâchoires d'outil qui peuvent être appliquées sur le fil, caractérisé en ce qu'au-dessus d'un support (2) plan, résistant à la chaleur et mauvais conducteur de la chaleur ou préchauffé, qui est disposé de préférence dans un guide-fil (1), se trouve un étrier de fusion, qui est mobile sur le fil, qui est fendu à la manière d'un peigne et qui est muni dans la direction transversale, d'une gorge (5) du diamètre du fil, et en ce qu'en outre il est prévu des moyens qui appliquent au fil (7) cet étrier de fusion avec une force définie pendant un chauffage de brève durée, par exemple par une impulsion de courant électrique.

2. Dispositif suivant la revendication 1, caractérisé en ce qu'en liaison avec l'étrier de fusion (3), il est prévu un dispositif, par exemple un tube, destiné à évacuer le matériau isolant (6) enlevé.

3. Procédé pour dénuder les fils et torons avec un dispositif suivant la revendication 1 ou 2, caractérisé en ce que l'isolant séparé par fusion s'enfonce sur toute la longueur à dénuder dans les fentes (4) de l'étrier de fusion (3) et est enlevé du fil après refroidissement de l'étrier de fusion.

FIG 1

FIG 2